(19) Europäisches Patentamt
European Patent Office
Office européen des brevets

(11) EP 4 691 663 A1

(12) EUROPEAN PATENT APPLICATION
published in accordance with Art. 153(4) EPC

(43) Date of publication:
11.02.2026 Bulletin 2026/07

(21) Application number: 24779050.4

(22) Date of filing: 29.02.2024

(51) International Patent Classification (IPC):
B21D 28/10 (2006.01)        B21D 22/02 (2006.01)
B21D 51/44 (2006.01)        H01M 50/15 (2021.01)
H01M 50/342 (2021.01)

(52) Cooperative Patent Classification (CPC):
B21D 22/02; B21D 28/10; B21D 51/44;
H01M 50/15; H01M 50/342; Y02E 60/10

(86) International application number:
PCT/JP2024/007656

(87) International publication number:
WO 2024/202912 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.03.2023 JP 2023049127

(71) Applicant: NIPPON STEEL CORPORATION
Chiyoda-ku
Tokyo 100-8071 (JP)

(72) Inventors:
• NORITA, Katsunari
  Tokyo 100-8071 (JP)
• NISHIOKA, Kosuke
  Tokyo 100-8071 (JP)
• NIGAKI, Tsuyoshi
  Tokyo 100-8071 (JP)
• YAMAGUCHI, Shunji
  Tokyo 100-8071 (JP)

(74) Representative: Zimmermann & Partner
Patentanwälte mbB
P.O. Box 330 920
80069 München (DE)

(54) **METAL MEMBER, BATTERY, METHOD FOR MANUFACTURING SAME, AND MOLD**

(57)     A method for manufacturing a metal member (20) includes the steps of: preparing a workpiece (40); and disposing the workpiece (40) between a punch (31) including a punch top surface (311), a punch shoulder (312), and a punch side surface (313), and a die (32) including a die flange surface (321), a die shoulder (322), and a die side surface (323), causing the punch (31) and the die (32) to approach relative to each other, and sandwiching and compressing the workpiece (40) by the punch shoulder (312) and the die shoulder (322), thereby forming a thin part (231) on the workpiece (40). Portions of the punch shoulder (312) and the die shoulder (322) that form the thin part (231) on the workpiece (40) have an arc shape or a tapered shape as viewed in a cross section, and are configured to satisfy $Cpd \leq 1.00$, $0.10 \times Cpd \leq w1$, and $w1 < w2$.

FIG. 3

# EP 4 691 663 A1

**Description**

TECHNICAL FIELD

The present disclosure relates to a metal member, a battery, and a method for manufacturing the same. In addition, the present disclosure relates to a die set, and more particularly relates to a die set for manufacturing a metal member.

BACKGROUND ART

Conventionally, for a closed battery, a lid body of a metal battery case is provided with a safety valve. The safety valve includes a valve body, and an annular part provided around the valve body. The annular part includes a thin part having a smaller thickness and a lower strength than the other portions of the lid body. The thin part can cleave prior to the other portions when the internal pressure of the battery case reaches a predetermined pressure or more. The cleavage of the thin part releases the pressure within the battery case, thus preventing the battery case from rupturing.

Patent Literature 1 discloses a method for forming a safety valve by subjecting a stainless steel plate to coining (local crushing). In Patent Literature 1, a coining step is performed multiple times, for example. In each execution of the coining step, a punch and a die that are each provided with an annular protrusion are used, and a portion of the steel plate is sandwiched by the annular protrusion of the punch and the annular protrusion of the die, thereby forming a thin annular part on the steel plate. The smaller the widths of the respective annular protrusions of the punch and the die, the later the coining step is performed.

Patent Literature 2 discloses a method for forming a safety valve, for example, by subjecting a metal plate, which is an aluminum alloy plate, to shearing. In Patent Literature 2, a punch and a die partially overlap each other, and a portion of the metal plate is compressed by the overlapping portions of the punch and the die, thereby forming a thin annular part on the metal plate.

CITATION LIST

PATENT LITERATURE

   Patent Literature 1: JP 2013-151024A
   Patent Literature 2: JP 2015-85356A

SUMMARY OF INVENTION

TECHNICAL PROBLEM

Patent Literature 1 describes that the annular protrusion of the punch and the annular protrusion of the die are pressed against both sides of the steel plate, and therefore the amounts of processing by the individual annular protrusions are reduced, resulting in a smaller processing load applied to each of the annular protrusions. In addition, Patent Literature 1 describes that the processing load applied to each of the annular protrusions can be further reduced by forming the thin annular part by performing the coining step multiple times. However, according to Patent Literature 1, the man-hours and the cost required to manufacture a metal member that will constitute the lid body of the battery case is increased since a plurality of coining steps are performed.

According to Patent Literature 2, a portion of a metal plate is compressed by the overlapping portions of the punch and the die until that portion is work-hardened. Patent Literature 2 describes that a thin part having a set thickness can be formed under a light processing load when the overlapping amount between the punch and the die is set to a value near a minimum overlapping amount at which the annular part does not break. However, according to Patent Literature 2, the material is unlikely to flow out from the overlapping portions since the flat surfaces of the punch and the die overlap each other. Accordingly, it is difficult to sufficiently reduce the load for forming the thin annular part. In particular, when a steel plate is adopted as the workpiece in place of the aluminum alloy plate in the method described in Patent Literature 2, it may be more difficult to reduce the load.

An object of the present disclosure is to provide a method for manufacturing a metal member that enables a thin part to be formed on a workpiece made of a metal plate in a simpler manner and under a lower load.

SOLUTION TO PROBLEM

A method for manufacturing a metal member according to the present disclosure includes the steps of: preparing a workpiece made of a metal plate; disposing the workpiece between a punch including a punch top surface, a punch shoulder, and a punch side surface, and a die including a die flange surface, a die shoulder, and a die side surface, causing the punch and the die to approach relative to each other, and sandwiching and compressing a portion of the workpiece by the punch shoulder and the die shoulder, thereby forming a thin part having a thickness smaller than thicknesses of other portions on the workpiece. The punch shoulder is continuous with an outer peripheral edge of the punch top surface. The punch side surface is connected to the punch top surface via the punch shoulder. The die flange surface has an annular shape. The die shoulder is continuous with an inner peripheral edge of the die flange surface. The die side surface is connected to the die flange surface via the die shoulder. The punch top surface is disposed inward of the die flange surface as viewed along a relative approaching direction of the punch and the die. The punch shoulder is opposed to the die shoulder in the approaching direction. The punch side surface is disposed outward of the die side surface as viewed along the approaching direction. Portions of the punch shoulder and the die shoulder that form the thin part on the workpiece have an arc shape or a tapered shape in cross-sectional views of the punch and the die, respectively, and are configured to satisfy the following expressions (1), (2), and (3):

$$Cpd \leq 1.00 \qquad (1)$$

$$0.10 \times Cpd \leq w1 \qquad (2)$$

$$w1 < w2 \qquad (3)$$

where Cpd represents a distance [mm] from a boundary between the punch shoulder and the punch side surface to a boundary between the die shoulder and the die side surface in a direction perpendicular to the approaching direction in cross sections of the punch and the die. w1 represents a radius of curvature [mm] of the punch shoulder when the punch shoulder has an arc shape as viewed in the cross section of the punch, and represents a length [mm] of the punch shoulder in the direction perpendicular to the approaching direction when the punch shoulder has a tapered shape as viewed in the cross section of the punch. w2 represents a radius of curvature [mm] of the die shoulder when the die shoulder has an arc shape as viewed in the cross section of the die, and represents a length [mm] of the die shoulder in the direction perpendicular to the approaching direction when the die shoulder has a tapered shape as viewed in the cross section of the die.

ADVANTAGEOUS EFFECTS OF INVENTION

With the method for manufacturing a metal member according to the present disclosure, it is possible to form a thin part on a workpiece made of a metal plate in a simpler manner and under a lower load.

BRIEF DESCRIPTION OF DRAWINGS

[FIG. 1] FIG. 1 is a perspective view schematically showing a configuration of a battery according to a first embodiment.
[FIG. 2] FIG. 2 is a cross-sectional view taken along the line II-II in FIG. 1.
[FIG. 3] FIG. 3 is a cross-sectional view of a die set used in a method for manufacturing a metal member according to the first embodiment.
[FIG. 4A] FIG. 4A is a schematic diagram for illustrating the method for manufacturing a metal member according to the first embodiment.
[FIG. 4B] FIG. 4B is a schematic diagram for illustrating the method for manufacturing a metal member according to the first embodiment.
[FIG. 4C ] FIG. 4C is a schematic diagram for illustrating the method for manufacturing a metal member according to the first embodiment.
[FIG. 4D] FIG. 4D is a schematic diagram for illustrating the method for manufacturing a metal member according to the first embodiment.
[FIG. 4E] FIG. 4E is a schematic diagram for illustrating the method for manufacturing a metal member according to the first embodiment.

[FIG. 5] FIG. 5 is a cross-sectional view of a die set used in a method for manufacturing a metal member according to a second embodiment.

[FIG. 6] FIG. 6 is a cross-sectional view of a die set according to a modification of the first embodiment.

[FIG. 7] FIG. 7 is a cross-sectional view of a die set according to a modification of the second embodiment.

[FIG. 8] FIG. 8 is a cross-sectional view of a metal member according to a modification of the embodiments.

[FIG. 9] FIG. 9 is a cross-sectional view of a metal member according to another modification of the embodiments.

DESCRIPTION OF EMBODIMENTS

In general, an aluminum alloy plate is used for a battery case of a lithium ion secondary battery, for example. In a case where the space efficiency of the battery is to be improved, it is conceivable to use, in place of the aluminum alloy plate, a steel plate, which has a higher strength, as a workpiece of the battery case, to reduce the thickness of the battery case. On the other hand, since steel has a specific gravity higher than the specific gravity of the aluminum alloy, a significant reduction in the thickness of the battery case is required when it is necessary to avoid an increase in weight of the battery due to the use of a steel plate. More specifically, the specific gravity of steel is about three time the specific gravity of an aluminum alloy. Therefore, the thickness of a battery case made of a steel plate needs to be less than or equal to about 1/3 the thickness of a battery case made of an aluminum alloy plate. Such a reduction in thickness is required for not only a battery case, but also a lid body attached to the battery case as well.

A steel plate is a material that is harder than an aluminum alloy plate. After being subjected to plastic processing, a steel plate is further hardened by work hardening. For this reason, a larger load is needed for a steel plate to be subjected to forming by compression in the thickness direction thereof than the load needed for an aluminum alloy. However, in a case where a die set is brought into contact with a steel plate within a small area, and a high load is locally applied to the steel plate from the die set, the surface pressure of the contact surface between the die set and the steel plate becomes very high. As a result, the surface pressure may exceed the compressive yield strength of the die set, possibly resulting in damage to the die set. In particular, forming a thin part of a safety valve on a steel plate requires an excessive load because the steel plate needs to be compressed to have a thickness of about several tens of micrometers.

In view of the above-described circumstances, the present inventors investigated a method that enables a thin part to be formed under a low load even on a hard workpiece such as a steel plate. As a result, the present inventors have completed a method for manufacturing a metal member according to an embodiment.

A method for manufacturing a metal member according to an embodiment includes the steps of: preparing a workpiece made of a metal plate; disposing the workpiece between a punch including a punch top surface, a punch shoulder, and a punch side surface, and a die including a die flange surface, a die shoulder, and a die side surface, causing the punch and the die to approach relative to each other, and sandwiching and compressing a portion of the workpiece by the punch shoulder and the die shoulder, thereby forming a thin part having a thickness smaller than thicknesses of other portions on the workpiece. The punch shoulder is continuous with an outer peripheral edge of the punch top surface. The punch side surface is connected to the punch top surface via the punch shoulder. The die flange surface has an annular shape. The die shoulder is continuous with an inner peripheral edge of the die flange surface. The die side surface is connected to the die flange surface via the die shoulder. The punch top surface is disposed inward of the die flange surface as viewed along a relative approaching direction of the punch and the die. The punch shoulder is opposed to the die shoulder in the approaching direction. The punch side surface is disposed outward of the die side surface as viewed along the approaching direction. Portions of the punch shoulder and the die shoulder that form the thin part on the workpiece have an arc shape or a tapered shape in cross-sectional views of the punch and the die, respectively, and are configured to satisfy the following expressions (1), (2), and (3) (first configuration):

$$Cpd \leq 1.00 \quad (1)$$

$$0.10 \times Cpd \leq w1 \quad (2)$$

$$w1 < w2 \quad (3)$$

where Cpd represents a distance [mm] from a boundary between the punch shoulder and the punch side surface to a boundary between the die shoulder and the die side surface in a direction perpendicular to the approaching direction in cross sections of the punch and the die. w1 represents a radius of curvature [mm] of the punch shoulder when the punch shoulder has an arc shape as viewed in the cross section of the punch, and represents a length [mm] of the punch shoulder in the direction perpendicular to the approaching direction when the punch shoulder has a tapered shape as viewed in the cross section of the punch. w2 represents a radius of curvature [mm] of the die shoulder when the die shoulder has an arc shape as viewed in the cross section of the die, and represents a length [mm] of the die shoulder in the direction perpendicular to the approaching direction when the die shoulder has a tapered shape as viewed in the cross section of the die.

In the method for manufacturing according to the first configuration, the punch top surface is disposed inward of the annular die flange surface as viewed along the relative approaching direction of the punch and the die, and does not overlap the die flange surface. On the other hand, the punch shoulder is opposed to the relative approaching direction of the die shoulder and the punch and the die, and overlaps the die shoulder as viewed along the approaching direction. Therefore, in the step of forming the thin part, the workpiece is not constrained by the punch top surface and the die flange surface, and a portion of the workpiece is sandwiched by the punch shoulder and the die shoulder. In this case, the material of the portion of the workpiece that has been sandwiched and compressed by the punch shoulder and the die shoulder flows along the die shoulder toward the die side surface side. This makes it possible to form the thin part on the workpiece under a relatively low load.

Furthermore, in the method for manufacturing according to the first configuration, at least the portions of the punch shoulder and the die shoulder that form the thin part have an arc-shaped or tapered cross section. In at least the portions of the punch shoulder and the die shoulder that form the thin part, the overlapping amount between the punch and the die, and the proportion of the punch shoulder in the overlapping amount are defined ($Cpd \leq 1.00$, and $0.10 \times Cpd \leq w1$). In addition, in at least the portions of the punch shoulder and the die shoulder that form the thin part, the dimensional relationship between the punch shoulder and the die shoulder is also defined (w1 < w2). This makes it possible to further reduce the load applied during formation of the thin part on the workpiece. In the method for manufacturing according to the first configuration, the forming step using the punch and the die need not to be performed multiple times, and the thin part can be formed on the workpiece by performing the forming step once.

Therefore, with the method for manufacturing a metal member according to the first configuration, a thin part can be formed on a workpiece made of a metal plate in a simpler manner and under a lower load. Since the load required when forming the thin part on the workpiece is reduced, the load on the die set can be reduced, thus making it possible to suppress damage to the die set.

In the method for manufacturing according to the first configuration, the workpiece can have a thickness of 0.3 mm or more and 2.0 mm or less. In this case, in the above-described forming step, the thin part having a thickness of 60 $\mu$m or less may be formed on the workpiece (second configuration).

With the method for manufacturing according to the embodiment, the thin part is formed by sandwiching and compressing a portion of the workpiece by the punch shoulder and the die shoulder, while releasing the material of the compressed portion to the die side surface side along the die shoulder. Accordingly, even in a case where the workpiece having a thickness of 0.3 mm or more and 2.0 mm or less is compressed to have a thickness of 60 $\mu$m or less as in the case of the second configuration, the load applied during formation of the thin part is less likely to increase, and it is thus possible to reduce the load on the die set.

In the method for manufacturing according to the first or second configuration, the metal plate may be a steel plate (third configuration).

In the method for manufacturing according to the embodiment, the material of the portion of the workpiece that is sandwiched by the punch shoulder and the die shoulder flows out to the die side surface side along the die shoulder when forming the thin part on the workpiece. This makes it possible to form the thin part on the workpiece under a low load even in a case where a workpiece made of a relatively hard steel plate is used as in the case of the third configuration. Accordingly, it is possible to reduce the load on the die set.

In the method for manufacturing according to the third configuration, the steel plate may be a plated steel plate (fourth configuration).

In the method for manufacturing according to the third or fourth configuration, the workpiece can have a Rockwell hardness of 45 or more (fifth configuration).

A method for manufacturing a battery according to an embodiment includes the steps of: manufacturing a metal member using the method for manufacturing according to any one of the first to fifth configurations; preparing a battery case having a tubular shape; and attaching the metal member to the battery case to close an opening of the battery case (sixth configuration).

A metal member according to an embodiment includes a valve body, an annular part, and a member main body. The annular part is provided so as to surround the valve body. The member main body is provided around the annular part. The member main body is connected to the valve body via the annular part. The annular part includes a thin part. The thin part has a thickness smaller than the thicknesses of the valve body and the member main body. The thin part is formed so as to be continuous with one surface of the member main body in a thickness direction thereof. The valve body is disposed on a side opposite to the member main body relative to the thin part in the thickness direction. The valve body has, in a cross-sectional view of the metal member, a curved shape protruding to the side opposite to the member main body in the thickness direction. Alternatively, the valve body has an undulating shape that undulates in the thickness direction in the cross-sectional view of the metal member (seventh configuration).

A battery according to an embodiment includes: the metal member according to the seventh configuration; and a battery case. The battery case has a tubular shape. An opening of the battery case is closed by the metal member (eighth configuration).

A die set according to an embodiment is a die set for manufacturing a metal member. The die set includes a punch and a die. The punch includes a punch top surface, a punch shoulder, and a punch side surface. The punch shoulder is continuous with an outer peripheral edge of the punch top surface, and has an arc shape or a tapered shape in a cross-sectional view. The punch side surface is connected to the punch top surface via the punch shoulder. The die includes a die flange surface, a die shoulder, and a die side surface. The die flange surface has an annular shape. The die shoulder is continuous with an inner peripheral edge of the die flange surface, and has an arc shape or a tapered shape in a cross-sectional view. The die side surface is connected to the die flange surface via the die shoulder. When the punch and the die are disposed coaxially such that the punch top surface is opposed to an opening of the die flange surface, the punch top surface is disposed inward of the die flange surface, the punch shoulder is opposed to the die shoulder, and the punch side surface is disposed outward of the die side surface, as viewed along an axial direction of the punch and the die. The punch and the die are configured to satisfy the following expressions (1), (2), and (3) (ninth configuration).

$$Cpd \leq 1.00 \qquad (1)$$

$$0.10 \times Cpd \leq w1 \qquad (2)$$

$$w1 < w2 \qquad (3)$$

where Cpd represents a distance [mm] from a boundary between the punch shoulder and the punch side surface to a boundary between the die shoulder and the die side surface in a direction perpendicular to the axial direction in cross sections of the punch and the die. w1 represents a radius of curvature [mm] of the punch shoulder when the punch shoulder has an arc shape as viewed in the cross section of the punch, and represents a length [mm] of the punch shoulder in the direction perpendicular to the axial direction when the punch shoulder has a tapered shape as viewed in the cross section of the punch. w2 represents a radius of curvature [mm] of the die shoulder when the die shoulder has an arc shape as viewed in the cross section of the die, and represents a length [mm] of the die shoulder in the direction perpendicular to the axial direction when the die shoulder has a tapered shape as viewed in the cross section of the die.

In the following, embodiments of the present disclosure will be described with reference to the drawings. In the drawings, identical or corresponding configurations are denoted by identical reference numerals, and the same description will not be repeated.

<First Embodiment>

[Configurations of Battery and Metal Member]

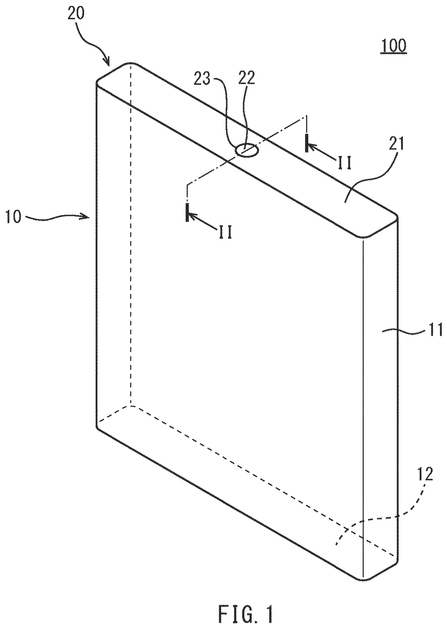

FIG. 1 is a perspective view schematically showing the configuration of a battery 100 according to the present embodiment. The battery 100 is, for example, but is not particularly limited to, a lithium ion secondary battery. The battery 100 includes a battery case 10 and a metal member 20.

In the example of the present embodiment, the battery case 10 has a bottomed tubular shape. That is, the battery case 10 includes a peripheral wall 11 and a bottom plate 12. The peripheral wall 11 has a tubular shape. In the example shown in FIG. 1, the peripheral wall 11 has a quadrangular tubular shape. However, the peripheral wall 11 may have a polygonal tubular shape other than a quadrangular tubular shape, a cylindrical shape or the like. The bottom plate 12 closes one end portion of the peripheral wall 11 in an axial direction.

The metal member 20 is a lid body of the battery case 10. The metal member 20 closes an opening of the battery case 10. That is, the metal member 20 closes an end portion of the peripheral wall 11 that is located opposite to the bottom plate 12 in the axial direction. The metal member 20 is joined to the battery case 10, for example, by welding or the like.

The metal member 20 includes a member main body 21, a valve body 22, and an annular part 23. The annular part 23 has an annular shape, and is provided so as to surround the valve body 22. In other words, the valve body 22 is disposed inward of the annular part 23. The member main body 21 is provided around the annular part 23. The member main body 21 is connected to the valve body 22 via the annular part 23. The member main body 21, the valve body 22, and the annular part 23 are formed as a single piece.

When the metal member 20 is a lid body of the battery case 10 as in the present embodiment, the member main body 21 has the shape of a substantially flat plate. In the example shown in FIG. 1, the member main body 21 has a substantially rectangular shape in a plan view so as to correspond to the shape of the battery case 10. However, the shape of the member main body 21 is not limited thereto. The member main body 21 can have a variety of shapes according to the shape of the battery case 10, for example.

In the example of the present embodiment, the valve body 22 has a substantially circular shape in a plan view of the metal member 20. The annular part 23 has a substantially toric shape in a plan view of the metal member 20. However, the shapes of the valve body 22 and the annular part 23 are not limited thereto. The valve body 22 may have, for example, an oval shape such as an elliptic shape or an oval track shape, or may have, for example, a polygonal shape such as a quadrangular shape. The annular part 23 may have an oval annular shape, a polygonal annular shape, or the like so as to correspond to the valve body 22.

The battery case 10 and the metal member 20 are both formed of a metal. Examples of the metal that forms the battery case 10 and the metal member 20 include steel. Steel includes plated steel and stainless steel. Preferably, the battery case 10 and the metal member 20 are formed of nickel plated steel. However, the battery case 10 and the metal member 20 may be formed of a metal other than steel. The metal that forms the battery case 10 and the metal member 20 may be, for example, aluminum, titanium, or copper, or an alloy thereof. The material of the metal member 20 is typically the same as the material of the battery case 10, but may be different from the material of the battery case 10.

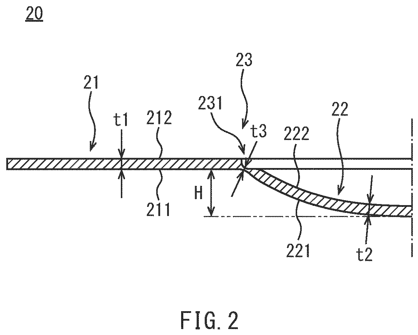

FIG. 2 is a cross-sectional view (cross-sectional view taken along the line **II-II** in FIG. 1) when the metal member 20 is cut at the position of a central axis of the valve body 22. In the present embodiment, the cross-sectional shape of the metal member 20 is symmetrical about the central axis, and therefore FIG. 2 shows only one side of the cross section of the metal member 20 relative to the central axis.

Referring to FIG. 2, the annular part 23 includes a thin part 231. The thin part 231 is a portion of the annular part 23 that has a thickness smaller than the thicknesses of the member main body 21 and the valve body 22. The thin part 231 is formed so as to be continuous with one surface 211 of two surfaces 211 and 212 of the member main body 21 in a thickness direction (plate thickness direction) thereof. In the metal member 20, the thin part 231 is connected so as to be biased in the thickness direction of the member main body 21 relative to an end face of the member main body 21 on the valve body 22 side. The valve body 22 is formed so as to be continuous with the thin part 231.

The valve body 22 is disposed on a side opposite to the member main body 21 relative to the thin part 231 in the thickness direction of the member main body 21. The valve body 22 is disposed inward of the annular part 23, and bulges relative to the thin part 231 and the member main body 21. A bulging height H of the valve body 22 is, for example, greater than or equal to a thickness t1 of the member main body 21. The bulging height H is the maximum distance, in the thickness direction of the member main body 21, between the surface 211 of the member main body 21 and a surface 221, which is one of both surfaces 221 and 222 of the valve body 22 and is connected to the surface 211 of the member main body 21.

The valve body 22 has a curved shape protruding to a side opposite to the member main body 21 as viewed in a cross section including the central axis of the valve body 22. In the example of the present embodiment, the valve body 22 is entirely curved in a cross-sectional view of the metal member 20. The valve body 22 has a substantially arc shape in a cross-sectional view of the metal member 20.

The member main body 21 can have a substantially or approximately uniform thickness t1. The thickness t1 of the member main body 21 is, for example, 0.3 mm or more and 2.0 mm or less. The valve body 22 can have a thickness t2 that is substantially equal to the thickness t1 of the member main body 21. That is, the thickness t2 of the valve body 22 may be 0.3 mm or more and 2.0 mm or less, as in the case of the member main body 21. When the metal member 20 is formed of steel, the thickness t1 of the member main body 21 and the thickness t2 of the valve body 22 are preferably 0.8 mm or less from the viewpoint of the weight reduction of the metal member 20. The thickness t1 of the member main body 21 and the thickness t2 of the valve body 22 can be measured at a position sufficiently away from the thin part 231.

The thin part 231 functions as a safety valve together with the valve body 22. The thin part 231 has a thickness t3 that is significantly smaller than the thickness t1 of the member main body 21 and the thickness t2 of the valve body 22 so as to be able to cleave prior to the member main body 21 when the internal pressure of the battery case 10 (FIG. 1) become greater than or equal to a predetermined pressure. The thickness t3 of the thin part 231 is, for example, 20% or less of the thickness t1 of the member main body 21 and the thickness t2 of the valve body 22. The thickness t3 of the thin part 231 may be 60 μm or less. The thickness t3 of the thin part 231 is, for example, 10 μm or more. The thickness t3 of the thin part 231 is the minimum thickness of the metal member 20.

The whole of the annular part 23 may be constituted by the thin part 231, or only a part thereof may be constituted by the thin part 231. That is, the annular part 23 may have a thickness t3 at which the annular part 23 can cleave when the internal pressure of the battery case 10 (FIG. 1) becomes greater than or equal to the predetermined pressure, over the entire circumference thereof, or may have the thickness t3 only at a portion thereof. When a portion of the annular part 23 is constituted by the thin part 231 having the thickness t3, the thicknesses of the other portions of the annular part 23 may be substantially equal to the thickness t1 of the member main body 21 and the thickness t2 of the valve body 22, or may be smaller than the thickness t1 of the member main body 21 and the thickness t2 of the valve body 22, but larger than the thickness t3 of the thin part 231. The thickness of the annular part 23 need not necessarily be constant over the entire circumference.

When the metal member 20 is formed of steel, the Rockwell hardness of the metal member 20 is, for example, 45 or more (45HR30TSm or more). The Rockwell hardness (Rockwell superficial hardness) of the metal member 20 can be obtained by performing a Rockwell hardness test in compliance with JIS Z 2245:2021 on the 30T scale at a given measurement position of the surface 211 or the surface 212 of the member main body 21. The measurement position of the Rockwell hardness is preferably a position sufficiently away from the thin part 231 on the surface 211 or the surface 212 of the member main body 21.

[Method for Manufacturing Metal Member]

(Die Set)

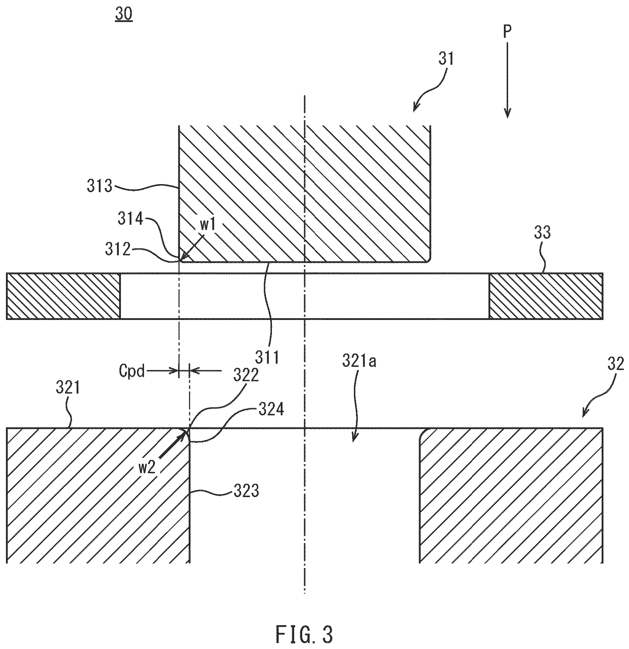

In the following, a method for manufacturing the metal member 20 will be described. First, with reference to FIG. 3, a die set 30 for manufacturing the metal member 20 will be described. As shown in FIG. 3, the die set 30 includes a punch 31 and a die 32. The die set 30 may further include a holder 33.

In use, the punch 31 and the die 32 are disposed coaxially. The punch 31 and the die 32 are configured to be capable of approaching and moving away relative to each other along the axial direction. The punch 31 and the die 32 are attached to a known pressing machine, for example. For example, the punch 31 may be attached to a slide of the pressing machine, and the punch 31 may approach and move away relative to the die 32 by being lifted and lowered together with the slide. Alternatively, the die 32 may be attached to the slide of the pressing machine, and the die 32 may approach and move away relative to the punch 31 by being lifted and lowered together with the slide. Hereinafter, the relative approaching direction of the punch 31 and the die 32, or in other words, the axial direction of the punch 31 and the die 32 in a state in which the die set 30 is used is referred to as a press direction P.

The punch 31 includes a punch top surface 311, a punch shoulder 312, and a punch side surface 313. The punch top surface 311 is a surface intersecting the press direction P. The punch top surface 311 may be a surface substantially perpendicular to the press direction P. The punch top surface 311 is, for example, a substantially flat surface as a whole. The punch top surface 311 has a shape corresponding to the valve body 22 (FIGS. 1 and 2) of the metal member 20 as viewed along the press direction P. That is, the punch top surface 311 can have a circular shape, an oval shape, a polygonal shape, or the like in a plan view so as to correspond to the valve body 22.

The punch shoulder 312 is continuous with an outer peripheral edge of the punch top surface 311. The punch shoulder 312 has an annular shape as viewed along the press direction P. As viewed along the press direction P, the punch top surface 311 is disposed inward of the annular punch shoulder 312. The punch shoulder 312 has a shape corresponding to the annular part 23 (FIGS. 1 and 2) of the metal member 20 as viewed along the press direction P. That is, the punch shoulder 312 can have a toric shape, an oval annular shape, or a polygonal annular shape or the like in a plan view so as to correspond to the annular part 23.

In the present embodiment, the punch shoulder 312 has an arc shape as viewed in a cross section including a central axis of the punch 31. The punch shoulder 312 has an arc shape protruding on the outer side of the punch 31 in a cross-sectional view of the punch 31. The punch shoulder 312 has a radius of curvature w1. The punch shoulder 312 having an annular shape as viewed along the press direction P may have a constant radius of curvature w1 over the entire circumference thereof, or may partially have a predetermined radius of curvature w1. The shape and the dimensions of the punch shoulder 312 need not necessarily be constant over the entire circumference.

The punch shoulder 312 is a corner portion between the punch top surface 311 and the punch side surface 313. The punch side surface 313 is connected to the punch top surface 311 via the punch shoulder 312. The punch side surface 313 is continuous with the annular punch shoulder 312 as viewed along the press direction P over the entire circumference. The punch side surface 313 extends in the press direction P as viewed in a cross section including the central axis of the punch 31. The punch side surface 313 may be parallel to the press direction P or may be slightly inclined relative to the press direction P, in a cross-sectional view of the punch 31.

The die 32 includes a die flange surface 321, a die shoulder 322, and a die side surface 323. The die flange surface 321 is a surface intersecting the press direction P. The die flange surface 321 may be a surface substantially perpendicular to the press direction P. The die flange surface 321 is a substantially flat surface as a whole, for example.

The die flange surface 321 has an annular shape as viewed along the press direction P. That is, the die flange surface 321 has an opening 321a at a central portion thereof. When the die set 30 is in use, the punch top surface 311 is opposed to the opening 321a of the die flange surface 321. As viewed along the press direction P, the punch top surface 311 is disposed inward of the die flange surface 321. Therefore, the punch top surface 311 is not opposed to the die flange surface 321 in the press direction P.

The die shoulder 322 is continuous with an inner peripheral edge of the die flange surface 321. The die shoulder 322 has an annular shape as viewed along the press direction P. The die shoulder 322 has a shape corresponding to the punch shoulder 312 as viewed along the press direction P. That is, the die shoulder 322 can have a toric shape, an oval annular shape, or a polygonal annular shape or the like in a plan view so as to correspond to the punch shoulder 312.

When the die set 30 is in use, the punch shoulder 312 is opposed to the die shoulder 322 in the press direction P. The die shoulder 322 has an arc shape as viewed in a cross section including the central axis of the die 32 as in the case of the punch shoulder 312. The die shoulder 322 has an arc shape protruding on the outer side of the die 32 in a cross-sectional view of the die 32. The die shoulder 322 has a radius of curvature w2. The die shoulder 322 having an annular shape as viewed along the press direction P may have a constant radius of curvature w2 over the entire circumference thereof, or may partially have a predetermined radius of curvature w2. The shape and the dimensions of the die shoulder 322 need not necessarily be constant over the entire circumference. The die shoulder 322 has the radius of curvature w2 at least at a position at which the punch shoulder 312 has the radius of curvature w1. That is, the punch 31 and the die 32 have a cross section in which the punch shoulder 312 has the radius of curvature w1 and the die shoulder 322 has the radius of curvature w2.

The die shoulder 322 is a corner portion between the die flange surface 321 and the die side surface 323. The die side surface 323 is connected to the die flange surface 321 via the die shoulder 322. The die side surface 323 is continuous with the annular die shoulder 322 as viewed along the press direction P over the entire circumference. The die side surface 323 extends in the press direction P as viewed in a cross section including the central axis of the die 32. The die side surface 323 extends from the die shoulder 322 to a side opposite to the punch 31 in a cross-sectional view of the die 32. The die side surface 323 may be parallel to the press direction P or may be slightly inclined relative to the press direction P in a cross-sectional view of the die 32.

As viewed along the press direction P, the punch side surface 313 is disposed outward of the die side surface 323. That is, when viewed along the press direction P, the punch side surface 313 is disposed so as to surround the die side surface 323. In this case, as viewed along the press direction P, the punch 31 and the die 32 partially overlap each other. When Cpd represents an overlapping amount between the punch 31 and the die 32, the overlapping amount Cpd, the radius of curvature w1 of the punch shoulder 312, and the radius of curvature w2 of the die shoulder 322 satisfy the following expressions (1), (2), and (3):

$$Cpd \leq 1.00 \qquad (1)$$

$$0.10 \times Cpd \leq w1 \qquad (2)$$

$$w1 < w2 \qquad (3)$$

The overlapping amount Cpd is the distance [mm] from a boundary 314 (an R stop on the punch side surface 313 side of the punch shoulder 312) between the punch shoulder 312 and the punch side surface 313 to a boundary 324 (an R stop on the die side surface 323 side of the die shoulder 322) between the die shoulder 322 and the die side surface 323 in a direction perpendicular to the press direction P in a cross section including the central axes of the punch 31 and the die 32, and in which the punch shoulder 312 and the die shoulder 322 have the radii of curvature w1 and w2, respectively. In the expressions, the units of the radius of curvature w1 of the punch shoulder 312 and the radius of curvature w2 of the die shoulder 322 are [mm] as in the case of the overlapping amount Cpd.

The holder 33 is disposed so as to be opposed to the die flange surface 321 in the press direction P. The holder 33 can have, for example, an annular shape as viewed along the press direction P as in the case of the die flange surface 321.

The holder 33 is configured to be capable of approaching and moving away relative to the die 32. The holder 33 can be attached to, for example, a known pressing machine together with the punch 31 and the die 32. For example, in a case where the holder 33 is attached to a slide of the pressing machine together with the punch 31, the holder 33 approaches and moves away relative to the die 32 as the slide is lifted and lowered. Alternatively, in a case where the die 32 is attached to the slide of the pressing machine, the die 32 approaches and moves away relative to the holder 33 as the slide is lifted and lowered.

In addition, the holder 33 is configured to be movable relative to the punch 31 in the press direction P. The holder 33 may be attached to the pressing machine, for example, via an elastic member capable of expanding and contracting in the press direction P, such as a hydraulic cylinder or a spring. In this case, the expansion or the contraction of the elastic member allow the holder 33 to be moved relative to the punch 31 in the press direction P.

(Manufacturing Method)

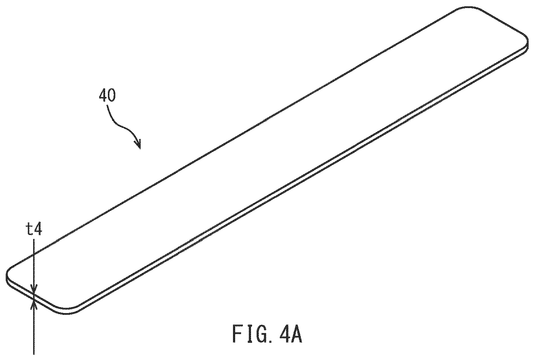

Next, with reference to FIGS. 4A to 4E, a method for manufacturing a metal member 20 using a die set 30 will be described. The metal member 20 according to the present embodiment includes a step of preparing a workpiece 40 (preparing step), and a step of forming a thin part 231 on the workpiece 40 (forming step).

Referring to FIG. 4A, in the preparing step, a workpiece 40 made of a metal plate is prepared. The workpiece 40 may be a metal plate (blank) with no special shape processing performed thereon, but may be a metal plate, for example, partially provided with a shape such as a projection and a recess.

The metal plate constituting the workpiece 40 is a steel plate, for example. The steel plate may be a plated steel plate. The plated steel plate is a steel plate including a base steel plate, and a plated layer covering the surface of the base steel plate. A known plated steel plate can be used as the workpiece 40. When the metal member 20 to be manufactured is a lid body of a battery 100 (FIG. 1), the plated steel plate is preferably a steel plate with nickel-based plating (nickel plated steel plate).

When the workpiece 40 is formed of a steel plate, the workpiece 40 can have a Rockwell hardness of 45 or more (hardness of 45HR30TSm or more), for example. The Rockwell hardness (Rockwell superficial hardness) of the workpiece 40 can be obtained by performing a Rockwell hardness test in compliance with JIS Z 2245:2021 on the 30T scale at a given measurement position on the surface of the workpiece 40, as in the case of the metal member 20 (FIGS. 1 and 2). When the workpiece 40 is a steel plate that has been subjected to some processing, the same Rockwell hardness test may be performed for the surface of the steel plate before processing, and the obtained Rockwell hardness may be used as the Rockwell hardness of the workpiece 40. The Rockwell hardness of the workpiece 40 is the same as the Rockwell hardness of the metal member 20 manufactured from the workpiece 40.

However, the workpiece 40 need not necessarily be formed of a steel plate. The workpiece 40 may be formed of a plate made of, for example, aluminum, titanium, or copper, or an alloy thereof.

A thickness t4 of the workpiece 40 is, for example, 0.3 mm or more and 2.0 mm or less. When the workpiece 40 is made of a steel plate, the thickness t4 of the workpiece 40 is preferably 0.8 mm or less.

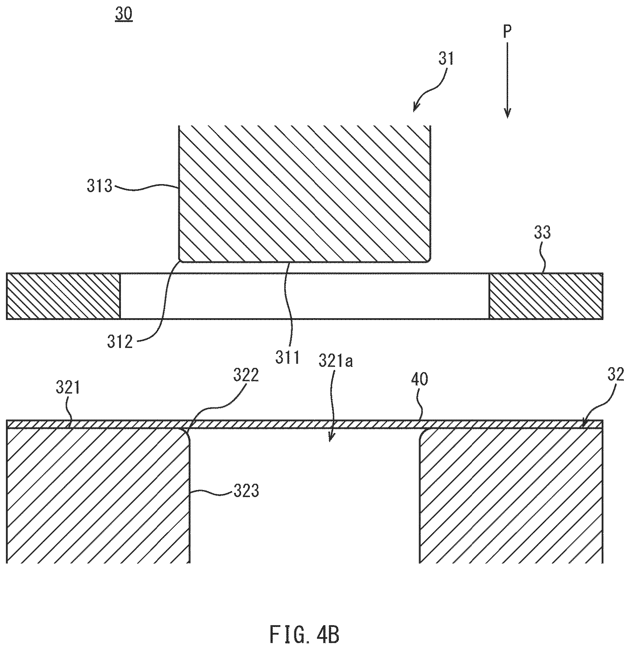

As shown in FIGS. 4B to 4E, in the forming step, the workpiece 40 is disposed between the punch 31 and the die 32, the punch 31 and the die 32 are caused to approach relative to each other, and a portion of the workpiece 40 is sandwiched and compressed by the punch shoulder 312 and the die shoulder 322, thereby forming the thin part 231 having a thickness smaller than the thicknesses of other portions in the workpiece 40. In the following, the forming step will be described in further detail.

Referring to FIG. 4B, prior to the forming step, the punch 31 and the die 32 are moved away from each other in the press direction P. In addition, the holder 33 is also moved away from the die 32 in the press direction P. In a case where the punch 31, the die 32, and the holder 33 are attached to a pressing machine, a slide of the pressing machine is disposed on a top dead center, and the punch 31 and the holder 33 are moved away from the die 32. Then, the workpiece 40 is disposed between the die 32, and the punch 31 and the holder 33. In the example of the present embodiment, the workpiece 40 is placed on the die flange surface 321.

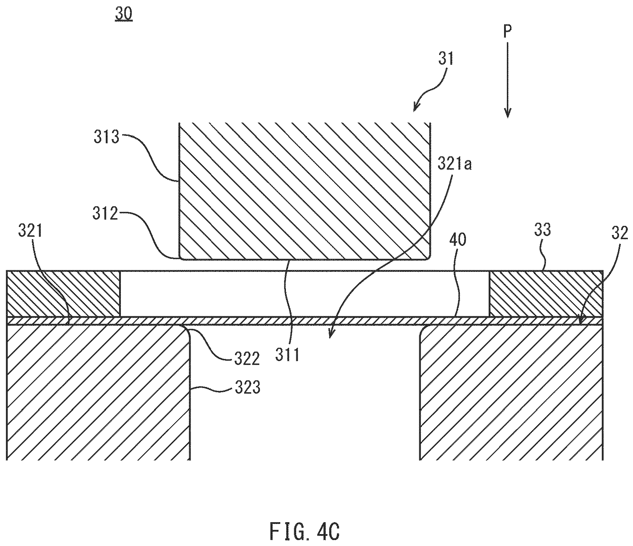

Referring to FIG. 4C, next, the punch 31 and the holder 33 are caused to approach relative to the die 32 along the press direction P. For example, the punch 31 and the holder 33, or the die 32 is moved in the press direction P together with the slide of the pressing machine, thereby causing the punch 31 and the holder 33, and the die 32 to approach relative to each other. Thus, first, the workpiece 40 is sandwiched between the holder 33 and the die flange surface 321.

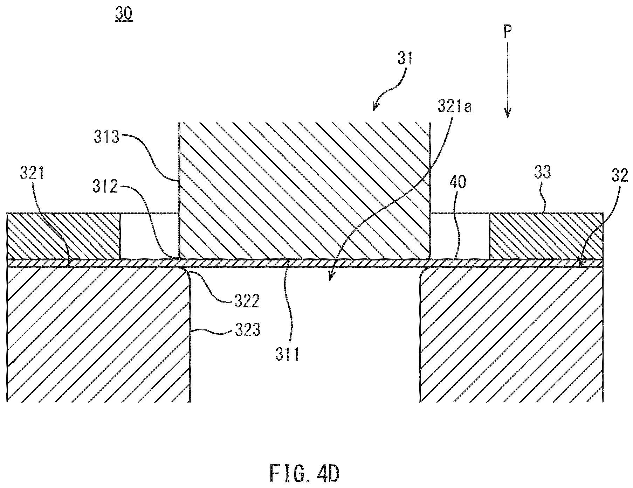

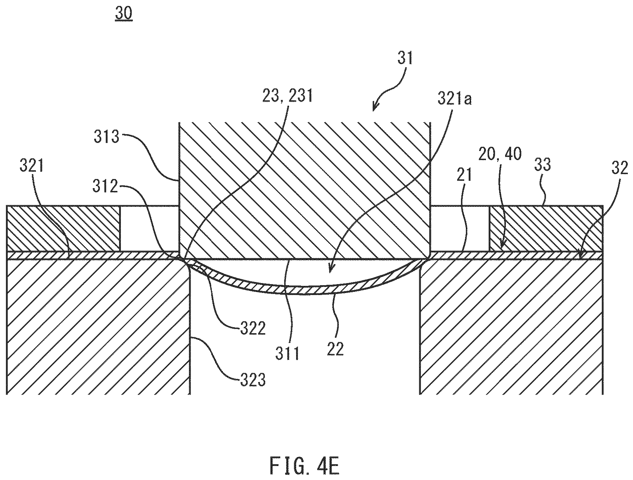

In a state in which the workpiece 40 is pressed by the holder 33, the punch 31 and the die 32 are further caused to approach relative to each other. Thus, as shown in FIG. 4D, the punch top surface 311 is in contact with the workpiece 40. When the relative approaching of the punch 31 and the die 32 toward each other continues, a portion of the workpiece 40 is sandwiched by the punch shoulder 312 and the die shoulder 322 as shown in FIG. 4E. A portion of the workpiece 40 that is sandwiched by portions of the punch shoulder 312 and the die shoulder 322 that satisfy the expressions (1) to (3) is compressed into a thin part 231. The portion of the workpiece 40 that has been in contact with the punch top surface 311 is moved away from the punch top surface 311 and bulges inward of the die side surface 323, to form a valve body 22. An annular part 23 including the thin part 231 is formed around the valve body 22.

Once the valve body 22 and the annular part 23 have been formed on the workpiece 40, the relative approaching of the punch 31 and the die 32 is stopped. Thereafter, the punch 31 and the holder 33, and the die 32 are moved away from each other along the press direction P. Thus, a metal member 20 including the member main body 21, the valve body 22, and the annular part 23 is manufactured.

Such a method for manufacturing the metal member 20 may constitute a part of a method for manufacturing the battery 100 shown in FIG. 1. That is, the method for manufacturing the battery 100 can include the steps of: manufacturing the metal member 20 using the manufacturing method including the preparing step and the forming step; preparing the battery case 10; and attaching the metal member 20 to the battery case 10 to close an opening of the battery case 10. The metal member 20 can close the opening of the battery case 10 while accommodating, for example, the contents necessary for the battery 100, such as an electrode assembly.

[Effects]

In the present embodiment, in the die set 30 used for manufacturing the metal member 20 is configured such that the punch 31 and the die 32 partially overlap each other as viewed along the press direction P. The punch shoulder 312 is opposed to the die shoulder 322 in the press direction P, and sandwiches and compresses, together with the die shoulder 322, a portion of the workpiece 40 on the metal member 20. At this time, the material of the portion of the workpiece 40 that is compressed by the punch shoulder 312 and the die shoulder 322 flows along the die shoulder 322 into the opening 321a of the die flange surface 321. This makes it possible to form the thin part 231 on the workpiece 40 under a relatively low load.

In a case where the punch top surface 311 and the die flange surface 321, which are substantially flat surfaces, overlap each other on the punch 31 and the die 32, a portion of the workpiece 40 is constrained by the punch top surface 311 and the die flange surface 321, resulting in an increase in the load applied when forming the thin part 231. That is, when the workpiece 40 is compressed by the punch top surface 311 and the die flange surface 321, the material is likely to be accumulated between the punch top surface 311 and the die flange surface 321, resulting in a higher forming load. However, in the present embodiment, the punch top surface 311 is disposed inward of the die flange surface 321 as viewed along the press direction P such that the punch top surface 311 and the die flange surface 321, which are substantially flat surfaces, do not overlap each other. In this case, the workpiece 40 can be sandwiched and compressed by the punch shoulder 312 and the die shoulder 322 alone, without constraining the workpiece 40 by the punch top surface 311 and the die flange surface 321. Thus, the flow of the material is more likely to occur when forming the thin part 231 on the workpiece 40. Accordingly, the thin part 231 can be formed on the workpiece 40 under a lower load. To prevent the flow of the material into the space between the holder 33 and the die flange surface 321 from the punch shoulder 312 side and the die shoulder 322 side, and an increase in the load attributed thereto, it is preferable that the holder 33 is disposed at a certain distance from the punch 31, rather than being disposed in proximity to the punch 31.

In the present embodiment, at least portions of the punch shoulder 312 and the die shoulder 322 that form the thin part 231 on the workpiece 40 have an arc shape in cross-sectional views of the punch 31 and the die 32, and are configured to satisfy the above-described expressions (1), (2), and (3). The overlapping amount Cpd between the punch 31 and the die 32, the radius of curvature w1 of the punch shoulder 312, and the radius of curvature w2 of the die shoulder 322 are set so as to satisfy the relationships represented by the expressions (1), (2), and (3). In this case, the load applied during formation of the thin part 231 on the workpiece 40 can be further reduced.

In the present embodiment, the valve body 22 and the thin part 231 are formed by performing the forming step once. Accordingly, as compared with a case where the forming step is performed multiple times, the metal member 20 can be manufactured easily, and the man-hours and the cost required to manufacture the metal member 20 can be reduced.

In this manner, according to the present embodiment, the thin part 231 can be formed on the workpiece 40 in a simpler manner and under a low load. For example, even in a case where a workpiece 40 made of a relatively hard steel plate is used, the thin part 231 can be formed on the workpiece 40 under a low load. Accordingly, it is possible to reduce the load on the die set 30, thus suppressing damage to the die set 30.

In a case where the overlapping amount Cpd between the punch 31 and the die 32 is too large, it is not possible to sufficiently reduce the load applied during formation of the thin part 231 on the workpiece 40. For this reason, in the present embodiment, the overlapping amount Cpd is set to 1.00 mm or less. From the viewpoint of further reducing the load, the overlapping amount Cpd is preferably 0.90 mm or less, and more preferably 0.80 mm or less.

In a case where the overlapping amount Cpd between the punch 31 and the die 32 is too small, the workpiece 40 may break when the workpiece 40 is compressed by the punch 31 and the die 32. This may make it difficult to stably form the thin part 231. For this reason, in the present embodiment, the overlapping amount Cpd is set to 0.05 mm or more. From the viewpoint of more reliably preventing the breakage of the workpiece 40, the overlapping amount Cpd is preferably 0.10 mm or more, and more preferably 0.15 mm or more.

For example, in a case where the radius of curvature w1 of the punch shoulder 312 is greater than or equal to the radius of curvature w2 of the die shoulder 322, a portion of the member main body 21 that is adjacent to the thin part 231 is raised to a side opposite to the valve body 22 when the thin part 231 is formed on the workpiece 40. Such a raised portion may interfere with other components or members. On the other hand, in the present embodiment, in portions of the punch shoulder 312 and the die shoulder 322 that form the thin part 231 on the workpiece 40, the radius of curvature w1 of the punch shoulder 312 is less than the radius of curvature w2 of the die shoulder 322. In this case, when the thin part 231 is formed on the workpiece 40, it is possible to suppress the raising of the portion of the member main body 21 that is adjacent to the thin part 231. Due to the radius of curvature w2 of the die shoulder 322 being larger than the radius of curvature w1 of the punch shoulder 312, the material of the portion of the workpiece 40 that is compressed by the punch shoulder 312 and the die shoulder 322 is more likely to flow to the opening 321a side of the die flange surface 321 along the die shoulder 322 when forming the thin part 231 on the workpiece 40.

In the present embodiment, the radius of curvature w1 of the punch shoulder 312 is, for example, 0.05 mm or more. As a result of a certain radius of curvature w1 being secured in this manner, when the workpiece 40 is made of a plated steel plate, for example, the plated layer is less likely to be divided by the punch shoulder 312. Accordingly, it is possible to prevent a reduction in the corrosion resistance due to the division of the plated layer at the thin part 231 of the metal member 20, thus suppressing rusting of the base steel plate. The radius of curvature w1 may be, for example, 1.00 mm or less. The radius of curvature w2 of the die shoulder 322 need only be larger than the radius of curvature w1 of the punch shoulder 312, and is, for example, 0.10 mm or more. The radius of curvature w2 of the die shoulder 322 is larger than the radius of curvature w1 of the punch shoulder 312, for example, by 0.05 mm or more. The radius of curvature w2 may be, for example, 2.00 mm or less.

In the present embodiment, the thickness t4 of the workpiece 40 is, for example, 0.3 mm or more and 2.0 mm or less. In the forming step, the thin part 231 having the thickness t3 of, for example, 60 µm or less is formed on the workpiece 40. In the present embodiment, even in a case where a portion of the workpiece 40 is processed to have a very small thickness in this manner, the processing is performed while the material of the portion of the workpiece 40 that is compressed by the punch shoulder 312 and the die shoulder 322 is being released to the opening 321a side of the die flange surface 321. Accordingly, it is possible to perform processing under a low load. Therefore, it is possible to reduce the load on the die set 30.

<Second Embodiment>

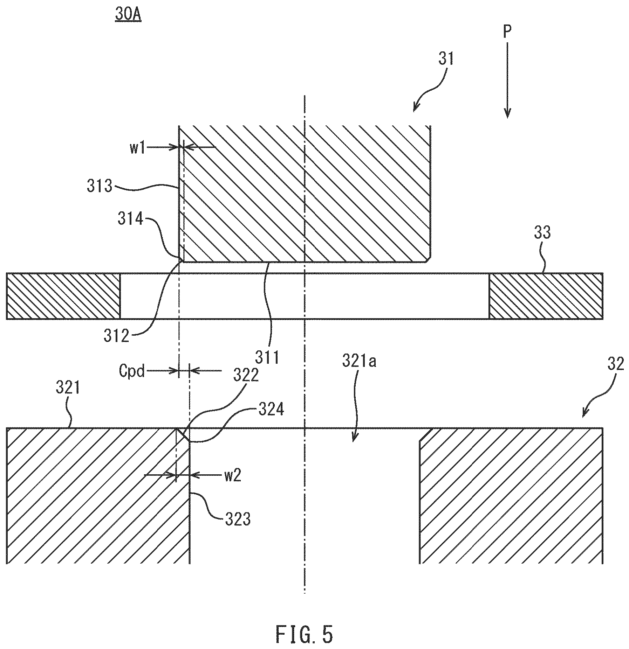

FIG. 5 is a cross-sectional view of a die set 30A according to the present embodiment. FIG. 5 shows a cross section of the die set 30A cut along a plane including the central axes of the punch 31 and the die 32. The present embodiment differs from the first embodiment in the configuration of the die set 30A. However, a method for manufacturing a metal member 20 and a battery 100 using the die set 30A, and the configurations of the metal member 20 and the battery 100 obtained by the manufacturing method are the same as those in the first embodiment (FIGS. 1, 2, and 4A to 4E).

Referring to FIG. 5, the die set 30A of the present embodiment differs from the die set 30 (FIG. 3) of the first embodiment in the shapes of the punch shoulder 312 and the die shoulder 322. In the die set 30A, the punch shoulder 312 has a tapered shape as viewed in a cross section including the central axis of the punch 31. The punch shoulder 312 is inclined relative to the press direction P so as to be further away from the central axis of the punch 31 as the distance from the punch top surface 311 in the press direction P increases.

The punch shoulder 312 has a tapered width w1. The tapered width w1 is the length of the punch shoulder 312 in a direction perpendicular to the press direction P as viewed in a cross section including the central axis of the punch 31. The tapered width w1 is, for example, 0.05 mm or more. The tapered width w1 may be, for example, 1.00 mm or less. The punch shoulder 312 having an annular shape as viewed along the press direction P may have a constant tapered width w1 over the entire circumference thereof, or may partially have a predetermined tapered width w1. As in the first embodiment, the shape and the dimensions of the punch shoulder 312 need not necessarily be constant over the entire circumference.

In the die set 30A, the die shoulder 322 also has a tapered shape as viewed in a cross section including the central axis of the die 32. The die shoulder 322 is inclined relative to the press direction P so as to approach the central axis of the die 32 as the distance from the die flange surface 321 in the press direction P increases.

The die shoulder 322 has a tapered width w2. The tapered width w2 is the length of the die shoulder 322 in a direction perpendicular to the press direction P as viewed in a cross section including the central axis of the die 32. The tapered width w2 is, for example, 0.10 mm or more. The tapered width w2 may be, for example, 2.00 mm or less. The die shoulder 322 having an annular shape as viewed along the press direction P may have a constant tapered width w2 over the entire circumference thereof, or may partially have a predetermined tapered width w2. The shape and the dimensions of the die shoulder 322 need not necessarily be constant over the entire circumference. The die shoulder 322 has the tapered width w2 at least at a position at which the punch shoulder 312 has the tapered width w1.

The punch 31 and the die 32 have a cross section in which the punch shoulder 312 has the tapered width w1 and the die shoulder 322 has the tapered width w2. In the aforementioned cross section, the tapered width w1 [mm] of the punch shoulder 312 and the tapered width w2 [mm] of the die shoulder 322, as well as the overlapping amount Cpd [mm] between the punch 31 and the die 32, satisfy the following expressions (1), (2), and (3). Regarding the expression (3), the tapered width w2 of the die shoulder 322 may be larger than the tapered width w1 of the punch shoulder 312 by, for example, 0.05 mm or more.

$$Cpd \leq 1.00 \qquad (1)$$

$$0.10 \times Cpd \leq w1 \qquad (2)$$

$$w1 < w2 \qquad (3)$$

In the die set 30A of the present embodiment, at least portions of the punch shoulder 312 and the die shoulder 322 that form the thin part 231 on the workpiece 40 have a tapered shape in cross-sectional views of the punch 31 and the die 32, and are configured to satisfy the above-described expressions (1), (2), and (3). The same effects as those achieved by the first embodiment can also be achieved in a case where the metal member 20 (FIGS. 1 and 2) is manufactured using the die set 30A.

Although embodiments according to the present disclosure have been described above, the present disclosure is not limited to the above-described embodiments, and various alterations can be made without departing from the gist of the disclosure.

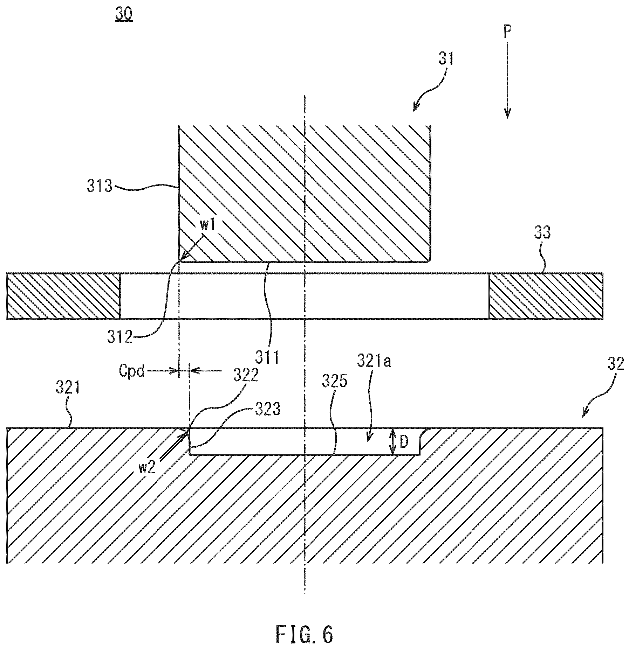

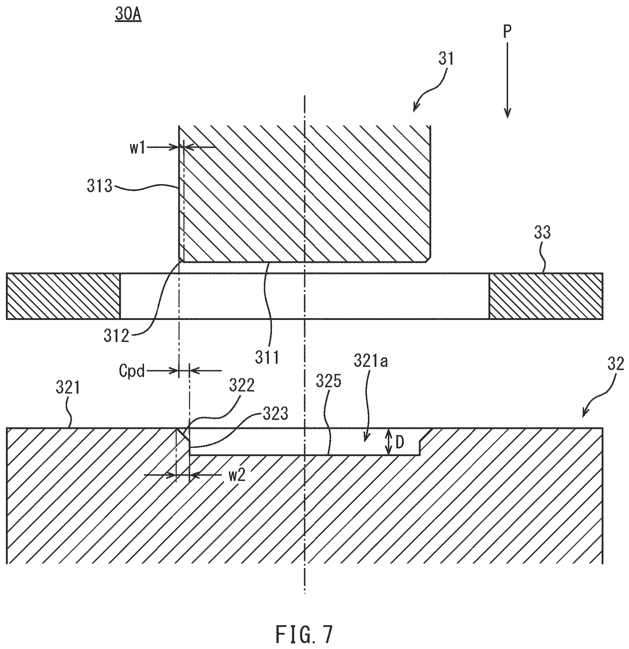

In the above-described embodiments, the die hole defined by the die side surface 323 is not provided with a bottom surface. However, as shown in FIGS. 6 and 7, the die 32 may include a die bottom surface 325 with which the die hole is provided. The die bottom surface 325 is opposed to the punch top surface 311 in the press direction P when the die sets 30 and 30A are in use. A distance (die hole depth) D from the die flange surface 321 to the die bottom surface 325 in the press direction P can be determined as appropriate. However, the die hole depth D is set to a size with which the workpiece is not constrained between the punch top surface 311 and the die bottom surface 325. Due to the workpiece being not constrained by the die bottom surface 325, the same load reducing effect as that achieved by the above-described embodiments can also be achieved in a case where the die hole is provided with the die bottom surface 325.

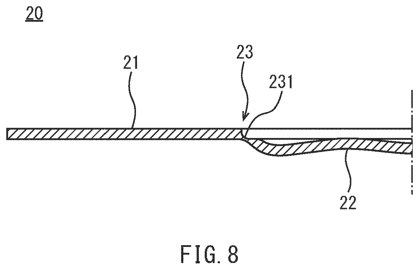

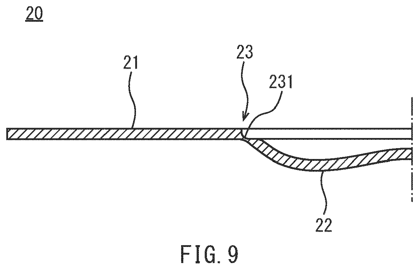

In a case where the die hole is provided with the die bottom surface 325, it is possible to change the shape of the metal member 20 manufactured using the punch 31 and the die 32. More specifically, as shown in FIGS. 8 and 9, in a case where the die hole is provided with the die bottom surface 325, the shape of the valve body 22 of the metal member 20 manufactured using the punch 31 and the die 32 differs from the shape of the valve body 22 in a case where the die bottom surface 325 is not present in the die hole. FIG. 8 is a cross-sectional view of a metal member 20 manufactured using a die 32 having a relatively small die hole depth D, and FIG. 9 is a cross-sectional view of a metal member 20 manufactured using a die 32 having a die hole depth D larger than that of the example shown in FIG. 8.

In a case where the thin part 231 of the metal member 20 is formed using the die 32 in which the die bottom surface 325 is not present in the die hole, and the punch 31 as in the above-described embodiments, the valve body 22 is entirely curved so as to protrude to a side opposite to the member main body 21 (FIG. 2) in a cross-sectional view of the metal member 20. On the other hand, in a case where the thin part 231 of the metal member 20 is formed using the die 32 in which the die hole is provided with the die bottom surface 325, and the punch 31, the valve body 22 has an undulating shape that undulates in the thickness direction of the member main body 21 as shown in FIGS. 8 and 9. In other words, the valve body 22 has, in at least a portion thereof, a wavelike shape in a cross-sectional view of the metal member 20.

In the above-described embodiments, the battery case 10 has a bottomed tubular shape. However, the battery case 10 may have a bottomless tubular shape. In this case, both of the openings present at opposite ends of the tubular battery case 10 in the axial direction may be closed by the metal member 20, or one of the openings may be closed by the metal member 20. In a case where one of the openings of the battery case 10 is closed by the metal member 20, the other opening may be closed by a lid body different from the metal member 20.

In the above-described embodiments, the metal member 20 is a lid body attached to the battery case 10. However, the metal member 20 need not necessarily be a lid body of the battery case 10. For example, the metal member 20 may be a bottomed or bottomless tubular battery case. In this case, the valve body 22 and the annular part 23 may be formed on a bottom plate of the battery case, or may be formed on a peripheral wall thereof. The bottomed tubular battery case can be formed, for example, by subjecting a metal plate to drawing. Depending on the shape of the battery case, the forming step of the valve body 22 and the annular part 23 including the thin part 231 may be performed using, as the workpiece 40, a metal plate before being formed into a bottomed tubular battery case, or may be performed using, as the workpiece 40, a battery case that has been formed from a metal plate into a bottomed tubular shape. The metal member 20 may constitute a part of a pressure container such as a boiler.

In the above-described embodiments, the die 32 is disposed below the punch 31 when forming the thin part 231 on the workpiece 40. However, the arrangement of the punch 31 and the die 32 is not limited thereto. For example, the die 32 may be disposed above the punch 31.

EXAMPLES

Hereinafter, the present disclosure will be described in further detail by way of examples. However, the present disclosure is not limited to the following examples.

In order to confirm the effects of the present disclosure, CAE analysis using commercially available analysis software (MSC. Marc, manufactured by MSC Software Co., Ltd.) was performed for the manufacture of metal members using die sets having the same shape as the die set 30 described in the first embodiment or the die set 30A described in the second embodiment, and the forming loads were evaluated. In the analysis, a nickel plated steel plate having a plate thickness of 0.3 mm and a Rockwell hardness (HR30TSm) of 51 was used as a workpiece, and a thin part was formed on the workpiece. The conditions for the present analysis and evaluation results thereof are shown in Table 1.

[Table 1]

| | Workpiece Thickness t4 [mm] | Expression (1): Overlapping amount Cpd [mm] | Punch shoulder | | | Die shoulder | | | Overlapping between flat surfaces | Thickness t3 of thin part [μm] | Evaluations | | Remarks |
|---|---|---|---|---|---|---|---|---|---|---|---|---|---|
| | | | Radius of curvature w1 [mm] | Tapered width w1 [mm] | Satisfies expression (2): 0.10 × Cpd ≤ w1? | Radius of curvature w2 [mm] | Tapered width w2 [mm] | Satisfies expression (3): w1<w2? | | | Forming load [kN] | Good/Acceptable/ Not acceptable | |
| Test Ex. 1 | 0.3 | 0.40 | 0.10 | - | YES | 0.50 | - | YES | Absent | 44 | 7.8 | Good | Examples |
| Test Ex. 2 | 0.3 | 0.40 | - | 0.20 | YES | - | 0.60 | YES | Absent | 51 | 14.5 | Good | Examples |
| Test Ex. 3 | 0.3 | 1.00 | 0.20 | - | YES | 2.00 | - | YES | Absent | 55 | 10.5 | Good | Examples |
| Test Ex. 4 | 0.8 | 0.40 | 0.10 | - | YES | 0.50 | - | YES | Absent | 47 | 14.1 | Good | Examples |
| Test Ex. 5 | 0.8 | 0.20 | - | 0.60 | YES | - | 1.20 | YES | Absent | 49 | 25.4 | Good | Examples |
| Test Ex. 6 | 1.5 | 0.40 | 0.10 | - | YES | 0.50 | - | YES | Absent | 52 | 21.5 | Good | Examples |
| Test Ex. 7 | 1.5 | 0.40 | 0.50 | - | YES | 1.00 | - | YES | Absent | 50 | 35.3 | Good | Examples |
| Test Ex. 8 | 0.3 | 0.40 | 0.05 | - | YES | 0.05 | - | NO | Present | 42 | 45.0 | Acceptable | Com. Ex. |
| Test Ex. 9 | 0.3 | 0.40 | 0.05 | - | YES | 0.06 | - | YES | Present | 43 | 42.0 | Acceptable | Com. Ex. |
| Test Ex. 10 | 0.3 | 0.40 | - | 0.50 | YES | - | 0.40 | NO | Absent | 56 | 50.9 | Acceptable | Com. Ex. |
| Test Ex. 11 | 0.3 | 1.00 | 0.05 | - | NO | 0.05 | - | NO | Present | 48 | 335.0 | Not acceptable | Com. Ex. |
| Test Ex. 12 | 1.5 | 1.00 | 0.05 | - | NO | 0.05 | - | NO | Present | 45 | 109.4 | Not acceptable | Com. Ex. |
| Test Ex. 13 | 1.5 | 1.00 | 0.10 | - | YES | 0.20 | - | YES | Present | 52 | 229.0 | Not acceptable | Com. Ex. |
| Test Ex. 14 | 0.8 | 1.20 | - | 0.60 | YES | - | 1.20 | YES | Absent | 46 | 245.0 | Not acceptable | Com. Ex. |

For Test Examples 1 to 7, the overlapping amount Cpd between the punch and the die, the radius of curvature or tapered width w1 of the punch shoulder, and the radius of curvature or tapered width w2 of the die shoulder satisfy all of the following expressions (1), (2), and (3). For Test Examples 1 to 7, there is no overlapping between the flat surfaces as viewed along the press direction, and the die overlaps the punch substantially by the die shoulder alone. Here, "Overlapping between flat surfaces" in the analysis (Table 1) means overlapping between the punch top surface and the die flange surface. For Test Examples 1 to 7, the punch top surface and the die flange surface, which are substantially flat surfaces, do not overlap each other, and the workpiece is not constrained by the punch top surface and the die flange surface during the step in which the thin part is formed.

$$Cpd \leq 1.00 \qquad (1)$$

$$0.10 \times Cpd \leq w1 \qquad (2)$$

$$w1 < w2 \qquad (3)$$

For Test Examples 1 to 7, the load (forming load) applied when the thin part was formed on the workpiece was reduced. However, for Test Examples 8 to 14, the forming load was significantly increased as compared with Test Examples 1 to 7. In particular, for Test Examples 11 and 12, in which the expressions (2) and (3) were not satisfied, and the punch top surface and the die flange surface overlapped each other, the forming load was excessively increased as compared with Test Examples 1 to 7. For Test Example 14, in which the expression (1) was not satisfied, the forming load was also excessively increased as compared with Test Examples 1 to 7.

Test Examples 9 and 13 are test examples in which the expressions (1), (2), and (3) were satisfied, but the thin part was formed on the workpiece in a state in which the punch top surface and the die flange surface overlapped each other. For Test Example 13, the ratio of the thickness t3 of the thin part to the thickness t4 of the original workpiece was smaller as compared with Test Example 9, and the workpiece was compressed to have a quite small thickness. Accordingly, for Test Example 13, the forming load was excessively increased as compared with Test Examples 1 to 7 and 9. The forming load of Test Example 9 was lower than the forming load of Test Example 13, but was still increased as compared with the forming loads of Test Examples 1 to 7.

Test Examples 8 and 10 are test examples in which the expressions (1) and (2) were satisfied, but the expression (3) was not satisfied. Moreover, for Test Example 8, the punch top surface and the die flange surface overlapped each other. For Test Examples 8 and 10, the forming load was reduced as compared with Test Examples 11 to 14, but the forming load was higher as compared with Test Examples 1 to 7.

The analysis has confirmed that the load applied during formation of the thin part on the workpiece is effectively reduced in a case where the overlapping amount Cpd between the punch and the die, the radius of curvature or tapered width w1 of the punch shoulder, and the radius of curvature or tapered width w2 of the die shoulder satisfy all of the following expressions (1), (2), and (3), and where the punch top surface and the die flange surface do no overlap each other as viewed along the press direction.

REFERENCE SIGNS LIST

100: Battery
10: Battery case
20: Metal member
21: Member main body
22: Valve body
23: Annular part
231: Thin part
30, 30A: Die set
31: Punch
311: Punch top surface
312: Punch shoulder
313: Punch side surface
314: Boundary
32: Die

321: Die flange surface
321a: Opening
322: Die shoulder
323: Die side surface
324: Boundary
40: Workpiece

**Claims**

1. A method for manufacturing a metal member, the method comprising the steps of:

    preparing a workpiece made of a metal plate; and
    disposing the workpiece between a punch including a punch top surface, a punch shoulder continuous with an outer peripheral edge of the punch top surface, and a punch side surface connected to the punch top surface via the punch shoulder, and a die including a die flange surface having an annular shape, a die shoulder continuous with an inner peripheral edge of the die flange surface, and a die side surface connected to the die flange surface via the die shoulder, causing the punch and the die to approach relative to each other, and sandwiching and compressing a portion of the workpiece by the punch shoulder and the die shoulder, thereby forming a thin part having a thickness smaller than thicknesses of other portions of the workpiece, wherein
    the punch top surface is disposed inward of the die flange surface as viewed from a relative approaching direction of the punch and the die,
    the punch shoulder is opposed to the die shoulder in the approaching direction,

    the punch side surface is disposed outward of the die side surface as viewed along the approaching direction, and
    portions of the punch shoulder and the die shoulder that form the thin part on the workpiece have an arc shape or a tapered shape in cross-sectional views of the punch and the die, respectively, and are configured to satisfy the following expressions (1), (2), and (3):

$$\mathrm{Cpd} \leq 1.00 \qquad (1)$$

$$0.10 \times \mathrm{Cpd} \leq \mathrm{w}1 \qquad (2)$$

$$\mathrm{w}1 < \mathrm{w}2 \qquad (3)$$

    where Cpd represents a distance [mm] from a boundary between the punch shoulder and the punch side surface to a boundary between the die shoulder and the die side surface in a direction perpendicular to the approaching direction in cross sections of the punch and the die, w1 represents a radius of curvature [mm] of the punch shoulder when the punch shoulder has an arc shape as viewed in the cross section of the punch, and represents a length [mm] of the punch shoulder in the direction perpendicular to the approaching direction when the punch shoulder has a tapered shape as viewed in the cross section of the punch, and w2 represents a radius of curvature [mm] of the die shoulder when the die shoulder has an arc shape as viewed in the cross section of the die, and represents a length [mm] of the die shoulder in the direction perpendicular to the approaching direction when the die shoulder has a tapered shape as viewed in the cross section of the die.

2. The method for manufacturing according to claim 1, wherein

    the workpiece has a thickness of 0.3 mm or more and 2.0 mm or less, and,
    in the forming step, the thin part having a thickness of 60 $\mu$m or less is formed on the workpiece.

3. The method for manufacturing according to claim 1 or 2, wherein
    the metal plate is a steel plate.

4. The method for manufacturing according to claim 3, wherein

the steel plate is a plated steel plate.

5. The method for manufacturing according to claim 3, wherein
the workpiece has a Rockwell hardness of 45 or more.

6. A method for manufacturing a battery, the method comprising the steps of:

   manufacturing a metal member by the method for manufacturing according to claim 1;
   preparing a battery case having a tubular shape; and
   attaching the metal member to the battery case to close an opening of the battery case.

7. A metal member comprising:

   a valve body;
   an annular part provided so as to surround the valve body; and
   a member main body provided around the annular part and connected to the valve body via the annular part,
   wherein
   the annular part includes a thin part having a thickness smaller than thicknesses of the valve body and the member
   main body, and being formed so as to be continuous with one surface of the member main body in a thickness
   direction thereof, and
   the valve body is disposed on a side opposite to the member main body relative to the thin part in the thickness
   direction, and has, in a cross-sectional view of the metal member, a curved shape protruding to the side opposite
   to the member main body in the thickness direction, or an undulating shape that undulates in the thickness
   direction.

8. A battery comprising:

   the metal member according to claim 7; and
   a battery case having a tubular shape and whose opening is closed by the metal member.

9. A die set for manufacturing a metal member, the die set comprising:

   a punch including a punch top surface, a punch shoulder continuous with an outer peripheral edge of the punch
   top surface and having an arc shape or a tapered shape in a cross-sectional view, and a punch side surface
   connected to the punch top surface via the punch shoulder;
   a die including a die flange surface having an annular shape, a die shoulder continuous with an inner peripheral
   edge of the die flange surface and having an arc shape or a tapered shape in a cross-sectional view, and a die side
   surface connected to the die flange surface via the die shoulder, wherein,
   when the punch and the die are disposed coaxially such that the punch top surface is opposed to an opening of the
   die flange surface, the punch top surface is disposed inward of the die flange surface, the punch shoulder is
   opposed to the die shoulder, and the punch side surface is disposed outward of the die side surface, as viewed
   along an axial direction of the punch and the die, and
   the punch and the die are configured to satisfy the following expressions (1), (2), and (3):

$$\mathrm{Cpd} \le 1.00 \qquad (1)$$

$$0.10 \times \mathrm{Cpd} \le \mathrm{w1} \qquad (2)$$

$$\mathrm{w1} < \mathrm{w2} \qquad (3)$$

   where Cpd represents a distance [mm] from a boundary between the punch shoulder and the punch side surface
   to a boundary between the die shoulder and the die side surface in a direction perpendicular to the axial direction
   in cross sections of the punch and the die, w1 represents a radius of curvature [mm] of the punch shoulder when
   the punch shoulder has an arc shape as viewed in the cross section of the punch, and represents a length [mm] of
   the punch shoulder in the direction perpendicular to the axial direction when the punch shoulder has a tapered
   shape as viewed in the cross section of the punch, and w2 represents a radius of curvature [mm] of the die shoulder when the die shoulder has an arc shape as viewed in the cross section of the die, and represents a length [mm] of the die shoulder in the direction perpendicular to the axial direction when the die shoulder has a tapered shape as viewed in the cross section of the die.

FIG. 1

20

FIG. 2

FIG. 3

40

t4

FIG. 4A

30

313

312

311

31

P

33

321a

40

32

321

322

323

FIG. 4B

FIG. 4C

FIG. 4D

FIG. 4E

FIG. 5

30

313

w1

312

Cpd

321

w2

31

P

33

311

322

323

325

321a

D

32

FIG. 6

30A

31

P

w1

313

33

312

311

321a

Cpd

322

323

325

321

32

D

w2

FIG. 7

20

21      23   231

22

FIG. 8

20

21         23

231

22

FIG. 9

# EP 4 691 663 A1

| INTERNATIONAL SEARCH REPORT | International application No. |
|---|---|
| | **PCT/JP2024/007656** |

**A. CLASSIFICATION OF SUBJECT MATTER**

*B21D 28/10*(2006.01)i; *B21D 22/02*(2006.01)i; *B21D 51/44*(2006.01)i; *H01M 50/15*(2021.01)i; *H01M 50/342*(2021.01)i
FI:  B21D28/10 Z; B21D22/02 A; B21D51/44 Z; H01M50/15; H01M50/342 101

According to International Patent Classification (IPC) or to both national classification and IPC

**B. FIELDS SEARCHED**

Minimum documentation searched (classification system followed by classification symbols)

B21D28/10; B21D22/02; B21D51/44; H01M50/15; H01M50/342; B21D31/00; H01M50/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-251447 A (MATSUSHITA ELECTRIC INDUSTRIAL CO., LTD.) 15 September 2005 (2005-09-15) paragraphs [0022], [0041], fig. 4 | 1-5, 9 |
| Y | paragraphs [0022], [0041], fig. 4 | 6 |
| A | paragraphs [0022], [0041], fig. 4 | 7-8 |
| X | JP 2013-151024 A (NISSHIN STEEL CO., LTD.) 08 August 2013 (2013-08-08) paragraphs [0012]-[0014], fig. 1-3 | 7-8 |
| Y | paragraphs [0012]-[0014], fig. 1-3 | 6 |
| A | paragraphs [0012]-[0014], fig. 1-3 | 1-5, 9 |
| X | JP 2002-175789 A (MATSUSHITA ELECTRIC INDUSTRIAL CO., LTD.) 21 June 2002 (2002-06-21) paragraph [0030], fig. 8 | 7-8 |
| A | paragraph [0030], fig. 8 | 1-6, 9 |

☑ Further documents are listed in the continuation of Box C.  ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/007656**

**C.    DOCUMENTS CONSIDERED TO BE RELEVANT**

| Category* | Citation of document, with indication, where appropriate, of the relevant passages | Relevant to claim No. |
|---|---|---|
| A | JP 2001-102023 A (ALPS ELECTRIC CO., LTD.) 13 April 2001 (2001-04-13)<br>entire text, all drawings | 1-9 |
| A | JP 11-273640 A (MIYAMA TOOL KK) 08 October 1999 (1999-10-08)<br>entire text, all drawings | 1-9 |

Form PCT/ISA/210 (second sheet) (July 2022)

**INTERNATIONAL SEARCH REPORT**
Information on patent family members

International application No.

**PCT/JP2024/007656**

| Patent document cited in search report | | | Publication date (day/month/year) | Patent family member(s) | Publication date (day/month/year) |
|---|---|---|---|---|---|
| JP | 2005-251447 | A | 15 September 2005 | (Family: none) | |
| JP | 2013-151024 | A | 08 August 2013 | (Family: none) | |
| JP | 2002-175789 | A | 21 June 2002 | (Family: none) | |
| JP | 2001-102023 | A | 13 April 2001 | (Family: none) | |
| JP | 11-273640 | A | 08 October 1999 | TW        428339     B | |
| | | | | KR  10-1999-0046355     A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013151024 A
- JP 2015085356 A